# EUROPÄISCHE PATENTSCHRIFT

(11) **EP 1 740 405 B1**
(45) Veröffentlichungstag und Bekanntmachung des Hinweises auf die Patenterteilung: **17.10.2007**
(21) Anmeldenummer: 05733319.7
(22) Anmeldetag: 20.04.2005
(51) Int. Cl.: B60J 7/00

(54) **FAHRZEUGDACH MIT EINER ROLLOANORDNUNG**
VEHICLE ROOF COMPRISING A ROLLER BLIND SYSTEM
TOIT DE VEHICULE, MUNI D'UN SYSTEME DE STORE

(30) Priorität: 26.04.2004 DE 102004020336
(43) Veröffentlichungstag der Anmeldung: 10.01.2007
(73) Patentinhaber: Webasto AG, 82131 Stockdorf (DE)
(72) Erfinder: KÖLBL, Michael, 82061 Neuried (DE); SUESS, Wolfgang, 85356 Freising (DE); SCHULZ, Horst-Martin, 86947 Weil (DE); LANGGUTH, Karin, 82131 Gauting (DE); NOWAK, Michaela, 80339 München (DE); RUDOLPH, Thomas, 82229 Hechendorf (DE)
(86) Internationale Anmeldenummer: PCT/EP2005/004208
(87) Internationale Veröffentlichungsnummer: WO 2005/102753

(56) Entgegenhaltungen:
- DE-A1- 10 019 664
- DE-A1- 10 140 239
- DE-A1- 10 206 161
- DE-A1- 10 230 443
- DE-A1- 19 722 722
- DE-C1- 10 124 100
- FR-A- 2 786 809

## Beschreibung

Die vorliegende Erfindung betrifft ein Fahrzeugdach mit einer unterhalb eines mindestens teilweise transparenten Dachabschnitts angeordneten Rolloanordnung.

Üblicherweise umfasst eine Rolloanordnung für ein Fahrzeugdach mit einem transparenten Dachabschnitt eine karosseriefest montierte Wickelwelle, die in Aufwickelrichtung vorgespannt ist, um eine Rollobahn aufzuwickeln, an deren vorderen Ende ein Zugspriegel zum Ausziehen der Rollobahn vorgesehen ist.

In der DE 101 40 239 A1 ist eine Rolloanordnung für ein Fahrzeugdach beschrieben, bei welcher eine an seitlichen Führungen des Fahrzeugdaches verschiebbar geführte Wickelwelle vorgesehen ist, die zwischen einer abgesenkten heckseitigen Ablagestellung und einer Funktionsstellung unter einem transparenten Dachbereich verstellbar ist. An dem vorderen Ende der Rollobahn ist ein von einem Antrieb angetriebener Zugspriegel vorgesehen, um die Rollobahn auszufahren. Für die seitliche Führung der Wickelwelle und des Zugspriegels ist jeweils eine gemeinsame seitliche Führungsschiene vorgesehen. Der Antrieb der Wickelwelle und des Zugspriegels erfolgt über drucksteife Antriebskabel mittels zwei separaten Motoren.

Ferner sind Fahrzeugdächer bekannt, bei welchen unterhalb eines transparenten Dachabschnitts zwei getrennte Rolloanordnungen in Dachlängsrichtung hintereinander angeordnet sind, wobei jede Rolloanordnung eine Wickelwelle mit einer darauf aufwickelbaren Rollobahn aufweist, siehe zum Beispiel DE 100 19 664 A1, DE 101 24 100 C1, FR 2786809, DE 102 06 161 A1 und DE 102 30 443 A1. Dabei können die beiden Wickelwellen mittels eines Kopplungsmechanismus miteinander gekoppelt sein, siehe DE 102 06 161 A1 oder es können die Zugspriegel der beiden Rollobahnen miteinander gekoppelt sein, siehe DE 101 24 100 C1.

Nachteilig bei solchen Konstruktionen mit zwei hintereinander angeordneten Rolloanordnungen ist der relative konstruktive Aufwand, obschon dadurch transparente Dachbereiche mit einer großen Ausdehnung in Dachlängsrichtung abgeschattet werden können.

Aus der DE 197 22 722 A1 ist eine Sonnenschutzvorrichtung für ein Fahrzeugdach bekannt, bei welcher zwischen zwei Scheiben eine Rolloanordnung angeordnet ist, die zwei in Dachlängsrichtung feststehende Wickelwellen aufweist, zwischen denen sich eine Rollobahn erstreckt, die mit jedem Ende auf eine der beiden Wickelwellen aufwickelbar ist. Die Rollobahn umfaßt in Dachlängsrichtung zwei Bereiche mit unterschiedlicher optischer Transparenz. Die Wickelwellen können von einem oder von zwei getrennten Elektromotoren angetrieben sein.

Es ist Aufgabe der vorliegenden Erfindung, ein Fahrzeugdach mit einer Rolloanordnung zu schaffen, bei welchem eine flexible Abschattungsfunktion bei möglichst geringer Bauhöhe erzielt wird, wobei die Rolloanordnung insbesondere auch zur Abschattung eines transparenten Dachabschnitts mit großer Ausdehnung in Dachlängsrichtung geeignet sein soll.

Diese Aufgabe wird erfindungsgemäß gelöst durch ein Fahrzeugdach gemäß Anspruch 1. Dabei ist vorteilhaft, dass dadurch, dass für eine gemeinsame Rollobahn zwei in Dachlängsrichtung hintereinander angeordnete Wickelwellen vorgesehen sind, von denen eine in Dachlängsrichtung verschiebbar sind, einerseits eine flexible, stufenlose und individuelle Einstellung der gewünschten Beschattungssituation erzielt wird und andererseits eine relativ geringe Bauhöhe erreicht werden kann, da das Volumen der Rollobahn beim Aufwickeln auf zwei Wickelwellen verteilt wird und diese deshalb mit einem relativ geringen Durchmesser im aufgewickelten Zustand realisierbar sind. Dadurch ist die Rolloanordnung insbesondere auch für transparente Dachabschnitte mit einer relativ großen Ausdehnung in Dachlängsrichtung geeignet.

Eine alternative erfindungsgemäße Lösung der obigen Aufgabe wird durch ein Fahrzeugdach gemäß Anspruch 4 realisiert. Dabei sind beide Wickelwellen mittels eines gemeinsamen Antriebs gegenläufig in Dachlängsrichtung verschiebbar, wodurch eine flexible, stufenlose und individuelle Einstellung der gewünschten Beschattungssituation bei geringer Bauhöhe erzielt werden kann. Ferner kann durch die Verwenundung eines gemeinsamen Antriebs der konstruktive Aufwand und der Bauraumbedarf gering gehalten werden.

Es ist ferner eine Aufgabe der Erfindung, ein Fahrzeugdach mit einer möglichst einfach aufgebauten und dennoch bequem zu bedienenden Rolloanordnung zu schaffen.

Diese Aufgabe wird gelöst durch ein Fahrzeugdach gemäß Anspruch 8. Dabei ist vorteilhaft, dass durch das Vorsehen eines gemeinsamen Antriebs für die verschiebbare Wickelwelle und den Zugspriegel ein einfacher Aufbau bei komfortabler Bedienung erzielt werden kann.

Bevorzugte Ausgestaltungen der Erfindung ergeben sich aus den Unteransprüchen.

Im folgenden wird die vorliegende Erfindung anhand der beigefügten Zeichnungen beispielhaft näher erläutert. Dabei zeigen:
- Fig. 1: eine Seitenansicht eines schematischen Beispiels für ein erfindungsgemäßes Fahrzeugdach;
- Fig. 2: eine schematische Ansicht einer erfindungsgemäßen Rolloanordnung von unten, wobei ein gemeinsamer Antrieb für zwei verschiebbare Wickelwellen vorgesehen ist;
- Fig. 3: eine Ansicht wie Fig. 2, wobei eine der beiden Wickelwellen durch einen Zugspriegel ersetzt ist; und
- Fig. 4: eine Ansicht wie Fig. 2, wobei jedoch eine der beiden Wickelwellen zu einer Verschiebung angetrieben ist, während die andere nichtverschiebbar ist.

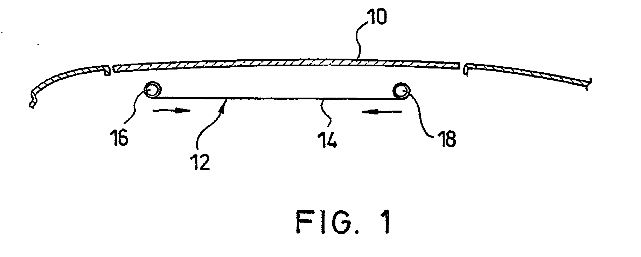

In Fig. 1 ist schematisch ein Fahrzeugdach mit einem mindestens teilweise transparenten Dachabschnitt 10 gezeigt, bei dem es sich um ein sogenanntes Panoramadach handeln kann, wobei der transparente Dachabschnitt 10 beispielsweise von einer fest stehenden Glas- oder Kunststoffscheibe gebildet werden kann. Alternativ kann der transparente Dachabschnitt auch zumindest zum Teil von einem transparenten Deckel eines außen geführten Schiebedaches gebildet werden (in Fig. 1 nicht gezeigt).

Unterhalb des transparenten Dachabschnitts 10 ist eine Rolloanordnung 12 vorgesehen, die eine Rollobahn 14 sowie zwei in Dachlängsrichtung hintereinander angeordnete Wickelwellen 16 und 18 aufweist, wobei das vordere Ende der Rollobahn 14 auf die vordere Wickelwelle 16 und das hintere Ende der Rollobahn auf die hintere Wickelwelle 18 aufwickelbar ist. Die beiden Wickelwellen 16, 18 sind jeweils in die Aufwickelrichtung vorgespannt, beispielsweise mittels einer entsprechenden Feder. Dadurch ist gewährleistet, dass sich die Rollobahn 14 in jeder Position straff zieht und eine Faltenbildung vermieden wird.

Die Rollobahn 14 kann in an sich bekannter Weise, z.B. aus einem Textilmaterial, insbesondere in der Farbe des Innenhimmels des Fahrzeugdaches, aus einem Netzstoff oder einer Folie, aus einem Rollo-Stoff mit Löchern, oder aus einem PVC-Stoff, gefertigt sein.

Die beiden Wickelwellen 16, 18 sind entlang einer jeweils seitlich angeordneten karosseriefesten Führung in Dachlängsrichtung verschiebbar, wobei dies mittels eines gemeinsamen Antriebs für beide Wickelwellen 16, 18 erfolgt.. Dadurch kann auf einfache Weise eine stufenlose, individuelle Einstellung der gewünschten Beschattungssituation erreicht werden. In Fig. 1 sind die Verschiebemöglichkeiten der beiden Wickelwellen 16 und 18, ausgehend von der in Fig. 1 gezeigten Stellung, schematisch mittels Pfeilen angedeutet.

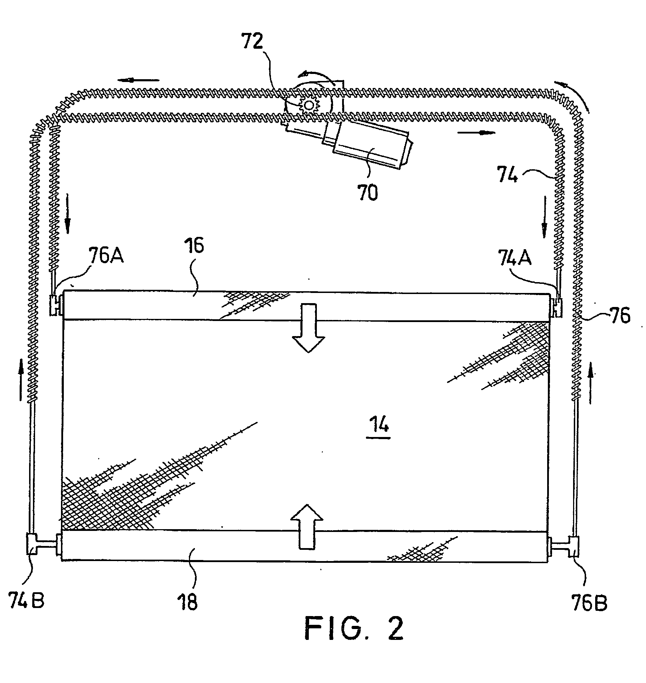

In Fig. 2 ist schematisch in einer Ansicht von unten eine Ausführungsform einer Rolloanordnung gezeigt, bei welcher ein gemeinsamer Antrieb für zwei in Dachlängsrichtung verschiebbare Wickelwellen, 16, 18 mit einer Rollobahn 14 vorgesehen ist.

Der Antrieb umfasst einen Elektromotor 70, der ein Ritzel 72 zu einer Drehbewegung antreibt (siehe Pfeil in Fig. 2). Das Ritzel 72 kämmt mit seinem Außenumfang an gegenüberliegenden Seiten mit zwei im wesentlichen parallel verlaufenden drucksteifen Antriebskabeln 74, 76, um diese zu einer Verschiebebewegung anzutreiben (siehe Pfeile in Fig. 13). Das Ritzel 72 ist zwischen den beiden Antriebskabeln 74, 76 angeordnet.

Das auslaufende Ende 74A des Antriebskabels 74 und das auslaufende Ende 76A des Antriebskabels 76 greift an jeweils einem der beiden seitlichen Enden der Wickelwelle 16 an, während das einlaufende Ende 74B des Antriebskabels 74 und das einlaufende Ende 76B des Antriebskabels 76 an jeweils einem der beiden seitlichen Enden der Wickelwelle-18 angreift (die Bezeichnung "auslaufend" bzw. "einlaufend" bezieht sich auf die in Fig. 13 beispielhaft gezeigte Drehrichtung des Ritzels 72). Bei der in Fig. 2 gezeigten Drehrichtung des Ritzels 72 bewegen sich die beiden Wickelwellen 16, 18 gegenläufig aufeinander zu, wodurch sich der von der Rollobahn 14 abgeschattete Bereich spiegelsymmetrisch zur Mitte verkleinert. Durch entgegengesetzte Drehung des Ritzels 72 können die beiden Wickelwellen 16, 18 wieder voneinander weg geschoben werden, um den von der Rollobahn 14 abgeschatteten Bereich wieder zu vergrößern. Insgesamt ist mit der gezeigten Konstruktion nur eine spiegelsymmetrische Verschiebung der Wickelwellen 16, 18 relativ zueinander möglich, nicht jedoch ein gemeinsames Verschieben der beiden Wickelwellen 16, 18 in Dachlängsrichtung.

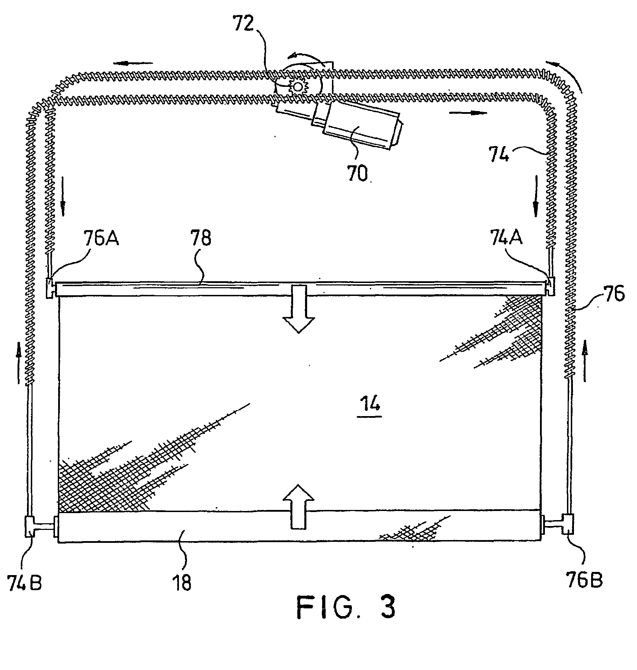

In Fig. 3 ist eine bezüglich Fig. 2 abgewandelte Ausführungsform gezeigt, wobei die vordere Wickelwelle 16 durch einen fest mit dem freien Ende der Rollobahn 14 verbundenen Zugspriegel ersetzt ist, der in ähnlicher Weise wie die Wickelwelle 16 seitlich in Dachlängsrichtung verschiebbar gelagert ist.

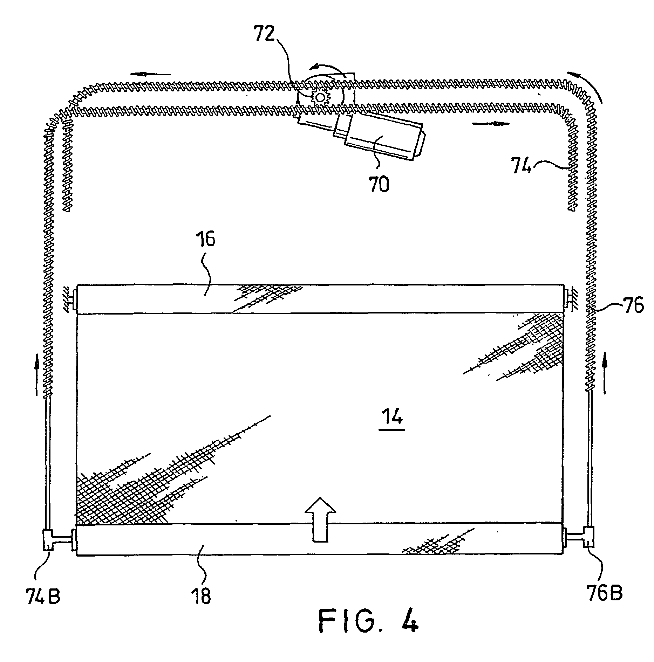

In Fig. 4 ist eine weitere bezüglich Fig. 2 abgewandelte Ausführungsform gezeigt, wobei die vordere Wickelwelle 16 in Dachlängsrichtung feststehend ausgebildet ist und entsprechend nicht mit den Antriebskabeln 74, 76 verbunden ist.

### Bezugszeichenliste

- 10: transparenter Dachabschnitt
- 12: Rolloanordnung
- 14: Rollobahn
- 15: Zwischenspriegel
- 16: vordere Wickelwelle
- 18: hintere Wickelwelle
- 70: Motor
- 72: Ritzel
- 74: Antriebskabel
- 76: Antriebskabel
- 74A: auslaufendes Ende von 74
- 74B: einlaufendes Ende von 74
- 76A: auslaufendes Ende von 76
- 76B: einlaufendes Ende von 76
- 78: Zugspriegel

## Patentansprüche

1. Fahrzeugdach, mit einem mindestens teilweise transparenten Dachabschnitt (10) sowie einer unterhalb des transparenten Dachabschnitts angeordneten Rolloanordnung (12) mit zwei in Dachlängsrichtung hintereinander angeordneten Wickelwellen (16, 18) und einer sich dazwischen erstreckenden Rollobahn (14), wobei das vordere Ende der Rollobahn auf die vordere Wickelwelle und das hintere Ende auf die hintere Wickelwelle aufwickelbar ist, wobei die beiden Wickelwellen jeweils in die Aufwickelrichtung vorgespannt sind, **dadurch gekennzeichnet dass** eine (18) der beiden Wickelwellen entlang einer jeweils seitlich angeordneten Führung in Dachlängsrichtung verschiebbar ist, während die andere Wickelwelle (16) in Dachlängsrichtung feststehend ist.

2. Fahrzeugdach gemäß Anspruch 1, **dadurch gekennzeichnet, dass** ein Antrieb (70, 72, 74, 76) vorgesehen ist, um die verschiebbare Wickelwelle (18) in Dachlängsrichtung zu verschieben.

3. Fahrzeugdach gemäß Anspruch 2, **dadurch gekennzeichnet, dass** der Antrieb einen Motor (70) und zwei von dem Motor gegenläufig angetriebene drucksteife Antriebskabel (74, 76) aufweist, die seitlich an der verschiebbaren Wickelwellen (16, 18) angreifen.

4. Fahrzeugdach, mit einem mindestens teilweise transparenten Dachabschnitt (10) sowie einer unterhalb des transparenten Dachabschnitts angeordneten Rolloanordnung (12) mit zwei in Dachlängsrichtung hintereinander angeordneten Wickelwellen (16, 18) und einer sich dazwischen erstreckenden Rollobahn (14), wobei das vordere Ende der Rollobahn auf die vordere Wickelwelle und das hintere Ende auf die hintere Wickelwelle aufwickelbar ist, wobei die beiden Wickelwellen jeweils in die Aufwickelrichtung vorgespannt sind, **dadurch gekennzeichnet dass** beide Wickelwellen entlang einer jeweils seitlich angeordneten Führung in Dachlängsrichtung verschiebbar sind, und wobei ein gemeinsamer Antrieb (70, 72, 74, 76) vorgesehen ist, um die Wickelwellen (16, 18) gegenläufig zueinander in Dachlängsrichtung zu verschieben.

5. Fahrzeugdach gemäß Anspruch 4, **dadurch gekennzeichnet, dass** der Antrieb einen Motor (70) und zwei von dem Motor gegenläufig angetriebene drucksteife Antriebskabel (74, 76) mit je zwei Endbereichen (74A, 74B, 76A, 76B) aufweist, wobei der Motor jeweils zwischen den beiden Endbereichen angreift, und wobei jeder der Endbereiche seitlich an jeweils einer der beiden Wickelwellen (16, 18) angreift.

6. Fahrzeugdach gemäß Anspruch 5, **dadurch gekennzeichnet, dass** die sich jeweils in der gleichen Richtung bezüglich des Motors (70) bewegenden Endbereiche (74A, 76A; 74B 76B) jedes der beiden Antriebskabel (74, 76) jeweils an der selben der beiden Wickelwellen (16, 18) angreifen.

7. Fahrzeugdach gemäß einem der Ansprüche 4 bis 6, **dadurch gekennzeichnet, dass** der Motor (70) die Antriebskabel (74, 76) mittels eines gemeinsamen Ritzels (72) antreibt, wobei die beiden Kabel im Bereich des Ritzels im wesentlichen parallel verlaufen, und wobei das Ritzel zwischen den beiden Antriebskabeln angeordnet ist und mit seinem Umfang an gegenüberliegenden Seiten mit jedem Antriebskabel in Eingriff steht.

8. Fahrzeugdach, mit einem mindestens teilweise transparenten Dachabschnitt (10) sowie einer unterhalb des transparenten Dachabschnitts angeordneten Rolloanordnung (12) mit einer in die Aufwickelrichtung vorgespannten Wickelwelle (18) und einer darauf aufwickelbaren Rollobahn (14), wobei das freie Ende der Rollobahn mit einem Zugspriegel (78) versehen ist, und wobei die Wickelwelle und der Zugspriegel entlang einer jeweils seitlich angeordneten Führung in Dachlängsrichtung verschiebbar sind, **dadurch gekennzeichnet, dass** ein gemeinsamer Antrieb (70, 72, 74, 76) vorgesehen ist, um die Wickelwelle (18) und den Zugspriegel (78) gegenläufig zueinander in Dachlängsrichtung zu verschieben.

9. Fahrzeugdach gemäß Anspruch 8, **dadurch gekennzeichnet, dass** der Antrieb einen Motor (70) und zwei von dem Motor gegenläufig angetriebene drucksteife Antriebskabel (74, 76) mit je zwei Endbereichen (74A, 74B, 76A, 76B) aufweist, wobei der Motor jeweils zwischen den beiden Endbereichen angreift, und wobei die sich jeweils in der gleichen Richtung bezüglich des Motors bewegenden Endbereiche (74A, 76A; 74B 76B) jedes der beiden Antriebskabel (74, 76) an der Wickelwelle (18) bzw. dem Zugspriegel (78) angreifen.

## Claims

1. Vehicle roof having an at least partly transparent roof section (10) and a roller blind system (12) arranged underneath the transparent roof section and having two winding shafts (16, 18) arranged one behind the other in the roof longitudinal direction and a roller blind web (14) extending between them, it being possible for the front end of the roller blind web to be wound onto the front winding shaft and for the rear end to be wound onto the rear winding shaft, the two winding shafts in each case being prestressed in the winding direction, **characterized in that** one (18) of the two winding shafts can be displaced in the roof longitudinal direction along a guide in each case arranged at the sides, while the other winding shaft (16) is stationary in the roof longitudinal direction.

2. Vehicle roof according to Claim 1, **characterized in that** a drive (70, 72, 74, 76) is provided in order to displace the displaceable winding shaft (18) in the roof longitudinal direction.

3. Vehicle roof according to Claim 2, **characterized in that** the drive comprises a motor (70) and two drive cables (74, 76) which are driven in opposite directions by the motor and are rigid in compression and which act laterally on the displaceable winding shafts (16, 18).

4. Vehicle roof having an at least partly transparent roof section (10) and a roller blind system (12) arranged underneath the transparent roof section and having two winding shafts (16, 18) arranged one behind the other in the roof longitudinal direction and a roller blind web (14) extending between them, it being possible for the front end of the roller blind web to be wound onto the front winding shaft and for the rear end to be wound onto the rear winding shaft, the two winding shafts in each case being prestressed in the winding direction, **characterized in that** both winding shafts can be displaced in the roof longitudinal direction along a guide in each case arranged at the sides, and a common drive (70, 72, 74, 76) is provided in order to displace the winding shafts (16, 18) in the roof longitudinal direction in mutually opposite directions.

5. Vehicle roof according to Claim 4, **characterized in that** the drive comprises a motor (70) and two drive cables (74, 76) which are driven in opposite directions by the motor and are rigid in compression and which each have two end regions (74A, 74B, 76A, 76B), the motor in each case acting between the two end regions, and each of the end regions acting laterally on one of the two winding shafts (16, 18) in each case.

6. Vehicle roof according to Claim 5, **characterized in that** the end regions (74A, 76A; 74B, 76B) of each of the two drive cables (74, 76), in each case moving in the same direction with respect to the motor (70), each act on the same of the two winding shafts (16, 18).

7. Vehicle roof according to one of Claims 4 to 6, **characterized in that** the motor (70) drives the drive cables (74, 76) by means of a common pinion (72), the two cables running substantially parallel in the region of the pinion, and the pinion being arranged between the two drive cables and being in engagement with each drive cable with its circumference on opposite sides.

8. Vehicle roof having an at least partly transparent roof section (10) and a roller blind system (12) arranged underneath the transparent roof section and having a winding shaft (18) prestressed in the winding direction and a roller blind web (14) that can be wound up on the latter, the free end of the roller blind web being provided with a draw bar (78), and it being possible for the winding shaft and the draw bar to be displaced in the roof longitudinal direction along a guide in each case arranged at the sides, **characterized in that** a common drive (70, 72, 74, 76) is provided in order to displace the winding shaft (18) and the draw bar (78) in the roof longitudinal direction in mutually opposite directions.

9. Vehicle roof according to Claim 8, **characterized in that** the drive comprises a motor (70) and two drive cables (74, 76) which are driven in opposite directions by the motor and are rigid in compression and which each have two end regions (74A, 74B, 76A, 76B), the motor in each case acting between the two end regions, and the end regions (74A, 76A; 748, 76B) of each of the two drive cables (74, 76), in each case moving in the same direction with respect to the motor (70), acting on the winding shaft (18) and, respectively, the draw bar (78).

## Revendications

1. Toit de véhicule muni d'une zone de pavillon (10) au moins partiellement transparente, ainsi que d'un système de store (12) installé au-dessous de ladite zone de pavillon transparente et comprenant deux arbres enrouleurs (16, 18) agencés en succession dans la direction longitudinale du toit, et une étoffe déroulable (14) s'étendant entre lesdits arbres, l'extrémité antérieure de ladite étoffe déroulable pouvant être enroulée sur l'arbre enrouleur antérieur, et l'extrémité postérieure pouvant être enroulée sur l'arbre enrouleur postérieur, les deux arbres enrouleurs étant respectivement précontraints dans la direction d'enroulement, **caractérisé par le fait que** l'un (18) des deux arbres enrouleurs peut coulisser dans la direction longitudinale du toit, le long d'un guide respectif occupant une position latérale, cependant que l'autre arbre enrouleur (16) est fixe dans la direction longitudinale du toit.

2. Toit de véhicule, selon la revendication 1, **caractérisé par le fait qu'**un entraînement (70, 72, 74, 76) est prévu pour déplacer l'arbre enrouleur coulissant (18) dans la direction longitudinale du toit.

3. Toit de véhicule, selon la revendication 2, **caractérisé par le fait que** l'entraînement est composé d'un moteur (70) et de deux câbles d'entraînement (74, 76) rigides à la pression, menés par ledit moteur dans des sens opposés et venant latéralement en prise avec l'arbre coulissant (18).

4. Toit de véhicule muni d'une zone de pavillon (10) au moins partiellement transparente, ainsi que d'un système de store (12) installé au-dessous de ladite zone de pavillon transparente et comprenant deux arbres enrouleurs (16, 18) agencés en succession dans la direction longitudinale du toit, et une étoffe déroulable (14) s'étendant entre lesdits arbres, l'extrémité antérieure de ladite étoffe déroulable pouvant être enroulée sur l'arbre enrouleur antérieur, et l'extrémité postérieure pouvant être enroulée sur l'arbre enrouleur postérieur, les deux arbres enrouleurs étant respectivement précontraints dans la direction d'enroulement, **caractérisé par le fait que** les deux arbres enrouleurs peuvent coulisser dans la direction longitudinale du toit, le long d'un guide respectif occupant une position latérale, sachant qu'un entraînement commun (70, 72, 74, 76) est prévu pour déplacer lesdits arbres enrouleurs (16, 18) dans des sens opposés dans la direction longitudinale du toit.

5. Toit de véhicule, selon la revendication 4, **caractérisé par le fait que** l'entraînement se compose d'un moteur (70) et de deux câbles d'entraînement (74, 76) rigides à la pression, comprenant respectivement deux tronçons d'extrémité (74A, 74B, 76A, 76B) et menés par ledit moteur dans des sens opposés, ledit moteur venant respectivement en prise entre les deux tronçons d'extrémité, et chacun desdits tronçons d'extrémité venant en prise latéralement avec l'un respectif des deux arbres enrouleurs (16, 18).

6. Toit de véhicule, selon la revendication 5, **caractérisé par le fait que** les tronçons d'extrémité (74A, 76A ; 74B, 76B) de chacun des deux câbles d'entraînement (74, 76), respectivement en mouvement dans la même direction vis-à-vis du moteur (70), viennent à chaque fois en prise avec le même arbre au sein des deux arbres enrouleurs (16, 18).

7. Toit de véhicule, selon l'une des revendications 4 à 6, **caractérisé par le fait que** le moteur (70) mène les câbles d'entraînement (74, 76) au moyen d'un pignon commun (72), les deux câbles s'étendant pour l'essentiel parallèlement dans la région dudit pignon, sachant que ledit pignon est interposé entre les deux câbles d'entraînement et vient en prise avec chaque câble d'entraînement, par son pourtour, sur des côtés opposés.

8. Toit de véhicule comprenant une zone de pavillon (10) au moins partiellement transparente, ainsi qu'un système de store (12) installé au-dessous de ladite zone de pavillon transparente et muni d'un arbre enrouleur (18) précontraint dans la direction d'enroulement, et une étoffe déroulable (14) pouvant être enroulée sur ledit arbre, l'extrémité libre de ladite étoffe déroulable étant dotée d'une barrette de traction (78), sachant que l'arbre enrouleur et la barrette de traction peuvent coulisser dans la direction longitudinale du toit, le long d'un guide respectif occupant une position latérale, **caractérisé par le fait qu'**un entraînement commun (70, 72, 74, 76) est prévu pour déplacer l'arbre enrouleur (18) et la barrette de traction (78) dans des sens opposés dans la direction longitudinale du toit.

9. Toit de véhicule, selon la revendication 8, **caractérisé par le fait que** l'entraînement se compose d'un moteur (70) et de deux câbles d'entraînement (74, 76) rigides à la pression, respectivement pourvus de deux tronçons d'extrémité (74A, 74B, 76A, 76B) et menés dans des sens opposés, par ledit moteur, le moteur venant respectivement en prise entre les deux tronçons d'extrémité, sachant que les tronçons d'extrémité (74A, 76A ; 74B, 76B) de chacun des deux câbles d'entraînement (74, 76), respectivement en mouvement dans la même direction vis-à-vis dudit moteur, viennent respectivement en prise avec l'arbre enrouleur (18) ou avec la barrette de traction (78).
